# EUROPÄISCHE PATENTANMELDUNG

(11) **EP 2 050 806 A1**
(43) Veröffentlichungstag der Anmeldung: **22.04.2009**
(21) Anmeldenummer: 07020567.9
(22) Anmeldetag: 20.10.2007
(51) Int. Cl.: C09K 8/36, B01F 17/00

(54) **Emulgatoren für Bohrspülmittel**

(71) Anmelder: Cognis Oleochemicals GmbH, 40589 Düsseldorf (DE)
(72) Erfinder: Müller, Heinz, 40789 Monheim (DE); Herzog, Nadja, 41352 Korschenbroich (DE); Mäker, Diana, 40789 Monheim (DE)
(74) Vertreter: Herzog, Martin

(57) **Zusammenfassung**

Umsetzungsprodukte von Fettsäuremischungen, enthaltend ungesättigte Fettsäuren der Kettenlänge C18 mit der Maßgabe, dass der Anteil an gesättigten Fettsäuren mit 18 C-Atomen bei weniger als 10 Gew.-%, bezogen auf den Gesamtanteil an Fettsäuren der Kettenlänge C18 beträgt, mit Alkyldiaminen, Alkyltriaminen oder Alkylpolyaminen bzw. deren Mischungen, und deren anschließender Umsetzung mit einer Polycarbonsäure oder deren Anhydride, sind geeignete, biologisch abbaubare Emulgatoren für Bohrspülungen, die mindestens eine kontinuierliche Ölphase, eine wässerige Phase sowie übliche Additive enthalten.

## Beschreibung

Die vorliegende Anmeldung betrifft Additive für Bohrlochbehandlungsmittel, insbesondere Emulgatoren für ölbasierte Emulsionsbohrspülungen, sowie Bohrspülsysteme, die derartige Emulgatoren enthalten.

Flüssige Spülsysteme zur Niederbringung von Gesteinsbohrungen unter Aufbringung des abgelösten Bohrkleins sind bekanntlich beschränkt eingedickt fließfähige Systeme auf Wasser- oder auf Ölbasis. Die zuletzt genannten Systeme auf Ölbasis finden in der Praxis zunehmend Bedeutung und werden insbesondere im Bereich der Off-Shore-Bohrung eingesetzt. Bohrspülungen auf Ölbasis werden im Allgemeinen als so genannte Invert-Emulsionsschlämme eingesetzt, die aus einem 3-Phasen-System bestehen: Öl, Wasser und feinteilige Feststoffe. Es handelt sich dabei um Zubereitungen vom Typ der W/O-Emulsionen, d.h. die wässrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorensysteme, Beschwerungsmittel, fluid-loss-Additive, Viskositätsregler sowie ggf. eine Alkalireserve.

Sofern, wie heute häufig eingesetzt, wässerige Bohrspülsysteme in Emulsionsform Verwendung finden, ist die Mitverwendung von Emulgatoren zwingend. Dem Fachmann sind eine Vielzahl geeigneter Verbindungen bekannt, wie beispielsweise der Offenbarung der EP 0 948 577 zu entnehmen ist. Allerdings sind bereits aus anderen technischen Sachgebieten bekannte Emulgatoren nicht ohne weiteres für die Bedingungen bei der Erbohrung einsetzbar. Es muss insbesondere beachtet werden, dass die Bohrspülung, die ins Erdreich gepumpt wird, sich natürlich entsprechend aufwärmt, abhängig von der Täufe z.B. auf Werte von 150 bis 250°F (66 bzw. 121°C), bei sehr tiefen Bohrungen bis 350°F (178°C). diesen Temperaturen muss ein Emulgator standhalten.

Außerdem sollten alle Additive und Hilfsmittel, die in Bohrspülsystemen off-shore und onshore zum Einsatz kommen hohen Anforderungen in Bezug auf die biologische Abbaubarkeit sowie die Toxizität erfüllen. Auch stellen die Umgebungsbedingungen bei Erdreicherbohrungen, wie hoher Druck, durch Einbruch sauer Gase erfolgende pH-Wert-Änderungen etc. hohe Anforderungen an die Auswahl möglicher Komponenten und Additive.

Die Auswahl von Emulgatoren für Bohrlochbehandlungssysteme und insbesondere von Bohrspülungen ist primär darauf gerichtet, solche Substanzen zu finden, die auch unter den extremen Bedingungen des praktischen Einsatzes zu einer maximalen Stabilität der Emulsion führen, d.h. es soll ein Viskositätsanstieg der Bohrspülmittel, insbesondere das Brechen der Emulsion unbedingt verhindert werden. Dies gilt insbesondere bei Emulsionen des Typs Wasser-in-Öl.

Es wurde gefunden, dass bestimmte vernetzte Umsetzungsprodukte von Fettsäuren und Aminen die oben geschilderten Anforderungen erfüllen können.

Ein erster Gegenstand der vorliegenden Anmeldung betrifft daher die Verwendung von Amidoaminen, hergestellt durch die Umsetzung einer Fettsäuremischung, enthaltend ungesättigte Fettsäuren der Kettenlänge C18 mit der Maßgabe, dass der mit Anteil an gesättigten Fettsäuren mit 18 C-Atomen bei weniger als 10 Gew.-%, bezogen auf den Gesamtanteil an Fettsäuren der Kettenlänge C18 beträgt, mit Alkyldiaminen, Alkyltriaminen oder Alkylpolyaminen und anschließender Umsetzung des Amidierungsproduktes mit einer Polycarbonsäure oder deren Anhydrid, als Emulgator in Bohrspülungen, die mindestens eine kontinuierliche Ölphase, eine wässerige Phase sowie übliche Additive enthält.

Amidoamine sind an sich bekannte Verbindungen die nach bekannten Methoden der synthetischen Chemie aus Carbon-, vorzugsweise aus Fettsäuren, und Di-, Tri- bzw. Oligoaminen hergestellt werden können. Fettsäureamidoamine können z.B. erhalten werden können. Typische Beispiele sind Fettsäureamidoamine, deren Fettsäurekomponente sich von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen ableiten. Für die Kondensation mit den Fettsäuren kommen beispielsweise Diethylentriamin, Triethylentriamin und Tetraethylenpentamin sowie deren Gemische in Frage. Vorzugsweise setzt man Fettsäureamidoamine der Formel ein,

R¹CO-NH-[(CH₂)ₙNR²]ₘR³

in der R¹CO für den Acylrest ein Fettsäure, und R² und R³ für Wasserstoff, sowie n und m für 2 oder 3 steht. Die Herstellung der Amidoamine kann durch direkte Kondensation der Polyamine mit den Fettsäuren oder durch Transamidierung unter Einsatz von Fettsäuremethylestem oder Triglyceriden erfolgen. Solche Amidoamine und deren Verwendung in Bitumenemulsionen sind aus der EP 1 111 010 A2 bekannt.

Die erfindungsgemäßen Amidoamine zeichnen sich nun aber dadurch aus, dass für deren Herstellung eine Fettsäuremischung mit vorzugsweise überwiegend (also mehr als 50 Gew.-% bezogen auf alle Fettsäuren) ungesättigte Fettsäuren mit 18 C-Atomen zum Einsatz kommt. Die erfindungsgemäß einzusetzenden Fettsäuremischungen enthalten dazu vorzugsweise Fettsäuren mit 16 und 18 C-Atomen, die dann umgesetzt werden mit Alkyldi, -triaminen oder -polyaminen. Besonders bevorzugte Amine sind Diethylendiamin, Diethylentriamin bzw. Diethylentriamin oder Tetraethylentriamin. Außerdem sind beliebige Gemische aller geeigneten Alkyltri- oder -polyamine möglich.

Dabei ist die Auswahl der Fettsäurekomponente wichtig. Im Sinne der vorliegenden Lehre werden solche Amidoamine bevorzugt verwendet, deren Fettsäurekomponente für die Synthese der Amidoamine eine Mischungen der nachfolgenden Fettsäuren enthält:

| | | |
|---|---|---|
| C16 | 7 bis 12 | Gew.-% |
| C18 | 0 bis 4 | Gew.-% |
| C18' | 30 bis 35 | Gew.-% |
| C18" | 30 bis 35 | Gew.-% |
| C18"' | 15 bis 20 | Gew.-% |

Solche Fettsäuremischungen werden beispielsweise und vorzugsweise aus Rapsöl erhalten. Es handelt sich daher also vorzugsweise um Rapsölfettsäuren, die zur Herstellung der erfindungsgemäßen Amidoamide eingesetzt werden.

Bevorzugt sind generell solche Fettsäuremischungen, bei denen der Anteil an ungesättigten C18-Fettsäuren größer ist als 50 Gew.-% und insbesondere größer als 70 Gew.-%. Weiterhin sind solche Fettsäuremischungen bevorzugt die überwiegend (> 50 Gew.-%) an linearen Fettsäuren und hier wiederum bevorzugt die ungesättigten Fettsäuren enthalten oder in einer besonders bevorzugten Ausführungsform aus diesen bestehen, wobei die Kettenlängen C16 bis C22 und insbesondere C16 bis C18 besonders bevorzugt sind. Der Anteil an gesättigten Fettsäuren der Kettenlänge C 18 muss kleiner als 10 Gew.-% sein.

Weiterhin ist es wesentlich, dass nach dem Amidierung eine Reaktion mit einer Polycarbonsäure, d.h. eine Carbonsäuren mit mindestens 2 Carboxylgruppe stattfindet. Geeignete Polycarbonsäure sind vorzugsweise Dicarbonsäuren mit 2 bibis 22 C-Atomen, wie Oxal-, Malon-, Bernstein-, Adipin-, Pimelin-, Kork-, Azelain-, Sebacin-, Brassyl-, Thapsis-und Pellargonsäure. Ebenfalls geeignet sind ungesättigte Dicarbonsäuren, wie Maleinsäure, Fumarsäure, Itaconsäure oder Hexa-2,4-diendisäure. Die ungesättigten Dicarbonsäuren, insbesondere die Maleinsäure sind besonders bevorzugt. Neben den Säuren können auch deren Anhydride verwendet werden. Durch die Zugabe der Polyfunktionellen Komponente tritt eine Vernetzung der Amdidoamine untereinander ein, die wesentlich für die technischen Eigenschaften des Produktes sind. Die Reaktionstemperatur liegt für die beiden Reaktionen vorzugsweise im Bereich von 100 bis 200°C und vorzugsweise im Bereich von 120 bis 190°C.

Die vernetzten Amidoamine im Sinne der vorliegenden Lehre werden als Emulgatoren für Bohrspülungen eingesetzt, die eine Wasser- und eine Ölphase nebeneinander enthalten. Vorzugsweise werden die ethoxylierten Amidoamine im Sinne der Erfindung als Emulgatoren in Bohrspülungssystemen eingesetzt, die, bezogen auf die gesamte Flüssigphase, 10 bis 30 Gew.-% Wasser und somit 90 bis 70 Gew.-% an Ölphase enthalten. Die vernetzen Amidoamine werden dazu vorzugsweise in Mengen von 0,1 bis 25 Gew.-%, vorzugsweise 0,1 bis 10 Gew.-% und insbesondere von 0,1 bis 5 Gew.-%, jeweils bezogen auf das Gewicht der gesamten Bohrspülung, eingesetzt.

Ein weiterer Gegenstand der vorliegenden Erfindung betrifft im Temperaturbereich von 5 bis 20°C fließ- und pumpfähige Bohrlochbehandlungsmittel, insbesondere Bohrspülungen, auf Basis einer geschlossenen Ölphase, gewünschtenfalls in Abmischung mit einer beschränkten Menge einer dispersen wässrigen Phase (W/O-Invert-Typ), gewünschtenfalls enthaltend gelöste und/oder dispergierte übliche Hilfsstoffe wie Viskositätsbildner, Emulgatoren, Fluid-loss-Additive, Netzmittel, feinteilige Beschwerungsstoffe, Salze, Alkalireserven und/oder Biozide, wobei sie in ihrer Ölphase Verbindungen ausgewählt aus den Klassen
a) Carbonsäureestern der Formel (II)

   R'-COO-R" (II)

   wobei R' für einen gesättigten oder ungesättigten, linearen oder verzweigten Alkylrest mit 5 bis 23 C-Atonien steht und R" einen Alkylrest mit 1 bis 22 C-Atomen bedeutet, wobei der Rest R" gesättigt oder ungesättigt, linear oder verzweigt sein kann,
b) linearen oder verzweigte Olefinen mit 8 bis 30 C-Atomen,
c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
d) wasserunlöslichen Alkohole der Formel (III)

   R"'-OH (III)

   wobei R"' für einen gesättigten, ungesättigten, linearen oder verzweigten Alkylrest mit 8 bis 24 C-Atomen steht,
e) Kohlensäurediestern,
f) Paraffine,
g) Acetale
h) Diesel- und/oder Mineralöle.

Diese Mittel enthalten, in der geschlossenen Ölphase die Öle der oben aufgeführten Gruppen allein oder in Abmischung untereinander. Besonders bevorzugt als Ölphase sind die Carbonsäureester der Formel (II) und hier insbesondere solche, die in der europäischen Offenlegungsschrift EP 0 374 672 bzw. EP 0 386 636 beschrieben werden. Besonders bevorzugt ist im Rahmen der erfindungsgemäßen Lehre, die ethoxylierten Verbindungen auf Basis von Amidoaminen der Formel (I) in solchen Invert-Bohrspülemulsionen einzusetzen, deren Ölphase Ester der Formel (II) enthält, wobei der Rest R' in Formel (II) für einen Alkylrest mit 5 bis 21 C-Atomen steht, vorzugsweise für Alkylreste mit 5 bis 17 und insbesondere Alkylreste mit 11 bis 17 C-Atomen. Besonders geeignete Alkohole in derartigen Estern basieren auf verzweigten oder unverzweigten Alkoholen mit 1 bis 8 C-Atomen, z.B. auf Methanol, Isopropanol, Isobutanol, oder 2-Ethylhexanol.

Weiterhin bevorzugt sind Alkohole mit 12 bis 18 C-Atomen. Besonders bevorzugte Ester sind gesättigte C12-C14-Fettsäureester bzw. ungesättigte C16-C18-Fettsäuren, jeweils mit Isopropyl-, Isobutyl- oder 2-Ethylhexanol als Alkoholkomponente. Weiterhin geeignet ist das 2-Ethylhyloctanoat. Weitere geeignete Ester sind Essigsäureester, hier besonders Acetate von C8-C18-Fettalkoholen. Derartige Ölphasen, üblicherweise als Carnerfluids bezeichnet, sind beispielsweise aus älteren Schutzrechten der Anmelderin Cognis bekannt, wobei hier insbesondere auf die europäischen Patentanmeldungen 0 374 671, 0 374,672, 0 382 070, 0 386 638 verwiesen wird. Auch Ölphasen auf Basis linearer Olefine sind dem Fachmann bekannt, hier sei die europäische Offenlegungsschrift 0 765 368 erwähnt. Auch verzweigte Ester vom Typ (a), wie sie beispielsweise in der WO 99/33932 (Chevron) oder in der EP 0 642 561 (Exxon) offenbart werden, sind geeignete Trägerflüssigkeiten. Die dort offenbarten Ester sind Teil der Offenbarung der vorliegenden Erfindung. Weiterhin bevorzugt sind Abmischungen derartiger bevorzugter Ester untereinander. Es ist auch bevorzugt, dass die Ölphase alpha-Olefine oder interne Olefine (IO) oder poly-alpha-Olefine (PAO) im Sinne der Komponente (b) enthalten. Die in der erfindungsgemäßen Ölphase vorliegenden IO beziehungsweise IO-Gemische enthalten dann entsprechende Verbindungen mit 12 bis 30 C-Atomen im Molekül, vorzugsweise mit 14 bis 24 C-Atomen und insbesondere mit bis zu 20 C-Atomen im Molekül. Sofern alpha-Olefine als Ölphase enthalten sind, werden vorzugsweise alpha-Olefine auf Basis von gesättigten oder ungesättigten Fettsäuren mit 12 bis 18 C-Atomen eingesetzt, wobei insbesondere gesättigte alpha-Olefine bevorzugt sind. Geeignet sind aber auch derartige alpha-Olefine auf Basis von Ölsäure.

Weiterhin können geeignete Bestandteile der Ölphase wasserunlösliche symmetrische oder unsymmetrische Ether (c) aus einwertigen Alkoholen natürlichen oder synthetischen Ursprungs sein, wobei die Alkohole 1 bis 24 C-Atome enthalten können. Auch wasserlösliche Alkohole der Gruppe (d) können bevorzugte Bestandteile der Ölphase im Sinne der vorliegenden technischen Lehre sein. Weiterhin sind Kohlensäurediester (e) gemäß der europäischen Anmeldung Nr. 0 532 570 geeignete Bestandteile der Ölphase. Diese Verbindungen können sowohl die gesamte Ölphase ausmachen als auch Teile davon.
Auch Paraffine (f) und/oder Acetale (g) können als Bestandteile der Ölphase eingesetzt werden. Weiterhin können Mineral- und/oder Dieselöle (h) Verwendung finden.

Es sind beliebige Mischungen der Verbindung a) bis h) untereinander möglich. Aus Gründen der Umweltverträglichkeit kann es aber auch vorteilhaft sein nur Mischungen der Ölphasen a) bis g) und vorzugsweise Mischungen von Estern a), Olefinen c) und/oder Paraffinen f) zu verwenden.

Die Ölphase der erfindungsgemäßen Emulsionen setzt sich vorzugsweise zu mind. 50 Gew.-% aus derartigen bevorzugten Verbindungen (a) bis (h) zusammen, insbesondere sind solche Systeme bevorzugt, bei denen die Ölphase zu 60 bis 80 % und insbesondere zu 100 Gew.-% aus Verbindungen (a) bis (h) oder Mischungen daraus bestehen. Die Ölphasen selbst weisen dann vorzugsweise Flammpunkte oberhalb 85 °C und vorzugsweise oberhalb 100°C auf. Sie sind insbesondere als Invert-Bohrspülungen vom W/O-Typ ausgebildet und enthalten dabei vorzugsweise die disperse wässrige Phase in Mengen von etwa 5 bis 30 Gew.-%. Die geschlossenen Ölphasen derartiger erfindungsgemäßen Spülungen weisen im Temperaturbereich von 0 bis 5°C eine Brookfield(RVT)-Viskosität vorzugsweise unterhalb 50 mPas, vorzugsweise nicht über 40 mPas auf. Der pH-Wert der Spülungen ist vorzugsweise auf einen pH-Wert im Bereich von etwa neutral bis mäßig basisch, insbesondere auf den Bereich von etwa 7,5 bis 11 eingestellt, wobei der Einsatz von Kalk als Alkalireserve besonders bevorzugt sein kann. Wasser ist ebenfalls ein Bestandteil der beschriebenen Bohrspülsysteme. Das Wasser wird vorzugsweise in Mengen von minimal etwa 0,5 Gew.-% in den Invert-Emulsionen vorhanden sein. Es ist aber bevorzugt, dass mindestens 5 bis 10 Gew.-% Wasser enthalten sind. Wasser in Bohrspülsystemen der hier beschriebenen Art enthält zum Ausgleich des osmotischen Gefälles zwischen der Bohrspülung und dem Formationswasser immer Anteile von Elektrolyten, wobei Calcium- und oder Natrium-Salze die bevorzugten Elektrolyte darstellen. Insbesondere CalCl₂ wird häufig verwendet. Aber auch andere Salze aus der Gruppe der Alkali- und/oder Erdalkali-Gruppe sind geeignet, beispielsweise Kaliumacetate und/oder Formiate.

Weitere bevorzugte Mischungsverhältnisse liegen bei 80 Gew.-% Ölphase und 20 Gew.-% Wasserphase. Die Bohrspülungen im Sinne der vorliegenden technischen Lehre können noch weitere, übliche Hilfs- und Zusatzstoffe enthalten. Hier kommen insbesondere weitere Emulgatoren, Beschwerungsmittel, fluid-loss-Additive, Viskositätsbildner und Alkalireserven, insbesondere "Lime" (= Ca(OH)₂) aber auch Biozide oder so genannte "wetting agents", welche die Benetzbarkeit von Oberflächen verbessern, in Betracht.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 5 bis 20 und vorzugsweise 5 bis 10 1b/bb1 oder besonders bevorzugt im Bereich von etwa 5 bis 8 Gew.-% - bezogen auf die Ölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 und vorzugsweise von 2 bis 5 1b/bb1 oder im Bereich von 1 bis 4 Gew.-%, bezogen auf Ölphase, verwendet werden kann. Das in der einschlägigen Praxis üblicherweise eingesetzte Beschwerungsmittel zur Einstellung des erforderlichen Druckausgleiches ist Baryt (BaSO₄), dessen Zusatzmengen den jeweils zu erwartenden Bedingungen der Bohrung angepasst wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen. Ein anderes geeignetes Beschwerungsmittel ist Calciumcarbonat.

Die Verwendung der erfindungsgemäßen Emulgatoren auf Basis vernetzter Amidoamine hat auch unter ökologischen Aspekten Vorteile. Diese Emulgatoren zeigen ein unerwartet gutes Abbauverhalten unter Bedingungen, wie sie in mariner Umgebunug vorkommen (gemäß dem Marine Bodis-Test, 1995). Die Emulgatoren im Sinne der vorliegenden Anmeldung eigenen sich daher insbesondere für die Herstellung von Bohrspülungen, die in off-shore Bohrungen eingesetzt werden sollen.

### Beispiele

Ein erfindungsgemäßes Amidoamin (E1) wurde hergestellt, indem zuerst 1658 g eine Fettsäuremischung gemäß Tabelle I, 300 g Diethylentriamin bei 180 °C zur Reaktion gebracht wurde und anschließend dieses Produkt mit 250 g Maleinsäureanhydrid bei 180 °C weiter zur Reaktion gebracht wurden. Es wurde ein hochviskoses Produkt erhalten. Unter gleichen Bedingungen, aber auf Basis eine Tallölfettsäuremischung wurde ein Vergleichsprodukt (V) synthetisiert (Tabelle I).

**Tabelle I :**

| Fettsäuremischungen¹⁾ zur Herstellung der vernetzten Amidoaminemulgatoren: | | |
|---|---|---|
| **Fettsäure der Kettenlänge:** | **E1 [Gew.-%]** | **V [Gew.-%]** |
| C16 | -- | 7 |
| C18 | -- | 2 |
| C18' | 29 | 33 |
| C18" | 57 | 32 |
| C18"' | 7 | 18 |

| | | |
|---|---|---|
| ¹) Rest auf 100 % sind Fettsäuren mit weniger als 16 bzw. mehr als 18 C-Atomen | | |

Für die Produkte "E1" und "V" wurde das Abbauverhalten mit dem BODIS-Test gemessen (Tabelle II):

**Tabelle 2: Ergebnisse des BODIS-Tests (Marine-Bodis-Test oder "BOD-Test for Insoluble Substances"; Amended to ISO TC/147/SC5/WG4, N141; OSPAR Ringtest 1995 Draft Procedure, Revised 10.05.1995; RF-Rogaland Research, Stavanger, Norwegen):**

| **Abbau nach** | **V** | **E1** |
|---|---|---|
| 28 Tagen | 8% | 63% |
| 84 Tagen | 21% | 74% |

Es zeigte sich, dass die erfindungsgemäßen Emulgatoren "E" wesentlich schneller abgebaut werden, als vergleichbare Produkte auf Basis einer anderen Fettsäuremischung.

Mit dem Emulgator "E1" wurde eine Bohrspülung der folgenden Zusammensetzung hergestellt:

| | |
|---|---|
| Ölphase: internes Olefin¹) | 173 ml |
| Wasser | 77 ml |
| Strukturbildner²⁾ | 2 g |
| Amidoamin "E1" | 8 g |
| Ca(OH)₂ | 2 g |
| Fluid Loss Additiv³⁾ | 7 g |
| BaSO₄ | 327 g |
| CaCl₂-Lsg. | 27 g |

| | |
|---|---|
| ¹⁾ Chevron IO C16-C18 ²⁾ Hydrophobierte Bentonit (Geltone II) ³⁾ Duratone HAT | |

Diese Spülung wurde 16 h bei 250 °F (121 °C) gealtert. Die rheologischen Kenndaten vor (before hot rolling = BHR) und nach Alterung (after hot rolling = AHR) waren wie folgt:

| | **BHR** | **AHR** |
|---|---|---|
| Elektrische Stabilität [V] | 630 | 510 |
| Plastische Viskosität [cP] | 25 | 25 |
| Yield Point [lb/100 ft²] | 24 | 27 |
| Gelstärke 10''/10' [lb/100 ft²] | 10/11 | 11/12 |

Die Messungen der rheologischen Daten erfolgten immer gemäß API bulletin RP 13 B-2. Die Spülungen wurden vor Alterung (before hot rolling = BHR) und nach Alterung bei 250 °F (121 °C) (after hot rolling = AHR) untersucht. Es gelten die folgenden Umrechnungsfaktoren in das SI-System: 1 1b = 0,454 kg; 1 bbl = 0,156 m3; 1 1b/bbl = 2,85 kg/m3; 1 1b/100 ft2 = 0, 4788 Pa; cP = 10-3 m/kg s.

## Patentansprüche

1. Verwendung von Amidoaminen, hergestellt durch
a) die Umsetzung einer Fettsäuremischung, enthaltend ungesättigte Fettsäuren der Kettenlänge C18 mit der Maßgabe, dass der mit Anteil an gesättigten Fettsäuren mit 18 C-Atomen bei weniger als 10 Gew.-%, bezogen auf den Gesamtanteil an Fettsäuren der Kettenlänge C18 beträgt, mit Alkyldiaminen, Alkyltriaminen oder Alkylpolyaminen, und
b) anschließender Umsetzung mit einer Polycarbonsäure oder deren Anhydride, als Emulgator in Bohrspülungen, die mindestens eine kontinuierliche Ölphase, eine wässerige Phase sowie übliche Additive enthält.

2. Verwendung nach Anspruch 1, **dadurch gekennzeichnet, dass** die Amidoamine durch Umsetzung eine Fettsäuremischung, enthalten Fettsäuren mit 16 und 18 C-Atomen mit den Alkyldi, -triaminen oder -polyaminen bzw. deren Mischungen hergestellt werden.

3. Verwendung nach mindestens einem der Ansprüche 1 bis 2, **dadurch gekennzeichnet, dass** die Fettsäuremischung für die Herstellung der Amidoamine die folgende Zusammensetzung aufweise:
| | | |
|---|---|---|
| C16 | 7 bis 12 | Gew.-% |
| C18 | 0 bis 4 | Gew.-% |
| C18' | 30 bis 35 | Gew.-% |
| C18" | 30 bis 35 | Gew.-% |
| C18"' | 15 bis 20 | Gew.-% |

4. Verwendung nach mindestens einem der Ansprüchen 1 bis 3, **dadurch gekennzeichnet, dass** als Amin ein Alkyltriamin und vorzugsweise ein Diethylentriamin eingesetzt wird.

5. Verwendung nach mindestens einem der Ansprüche 1 bis 4, **dadurch gekennzeichnet, dass** als Polycarbonsäuren ungesättigte Dicarbonsäuren und vorzugsweise Malein-oder Fumarsäure ausgewählt sind.

6. Verwendung nach mindestens einem der Ansprüche 1 bis 5, **dadurch gekennzeichnet, dass** die Amidoamine in Mengen von 0,1 bis 25 Gew.-%, vorzugsweise 0,1 bis 10 Gew.-% und insbesondere von 0,1 bis 5 Gew.-%, jeweils bezogen auf das Gewicht der Bohrspülung, eingesetzt werden.

7. Verwendung nach mindestens einem der Ansprüche 1 bis 6, **dadurch gekennzeichnet, dass** die ethoxylierten Derivate in Bohrspülungen des Typs Wasser-in-Öl eingesetzt werden.

8. Verwendung nach mindestens einem der Ansprüche 1 bis 7, **dadurch gekennzeichnet, dass** die Bohrspülungen als übliche Additive Beschwerungsmittel, fluid-loss Additive, Netzmittel, Alkalireserve, Viskositätsbildner und/oder Biozide enthalten.

9. Bohrlochbehandlungsmittel, welches im Temperaturbereich von 5 bis 20 °C fließ- und pumpfähige ist, auf Basis einer geschlossenen Ölphase in Abmischung mit einer beschränkten Menge einer dispersen wässrigen Phase (W/O-Invert-Typ), enthaltend optional gelöste und/oder dispergierte übliche Hilfsstoffe wie Viskositätsbildner, Fluid-loss-Additive, Netzmittel, feinteilige Beschwerungsstoffe, Salze, Alkalireserven und/oder Biozide, **dadurch gekennzeichnet, dass** das Mittel als Emulgatoren Amidoamine nach Anspruch 1 enthalten.

10. Bohrlochbehandlungsmittel nach Anspruch 9, **dadurch gekennzeichnet, dass** die Ölphase ausgewählt ist aus den Klassen
a) Carbonsäureestern der Formel (II)
R'-COO-R" (II)
wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
b) linearen oder verzweigte Olefinen mit 8 bis 30 C-Atomen,
c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
d) wasserunlöslichen Alkohole der Formel (III)
R"'-OH (III)
wobei R''' für einen gesättigten, ungesättigten, linearen oder verzweigten Alkylrest mit 8 bis 24 C-Atomen steht,
e) Kohlensäurediestern,
f) Paraffine,
g) Acetale
h) Diesel und/oder Mineralöle.
